# EUROPÄISCHE PATENTANMELDUNG

(11) **EP 3 705 851 A1**
(43) Veröffentlichungstag der Anmeldung: **09.09.2020**
(21) Anmeldenummer: 19161010.4
(22) Anmeldetag: 06.03.2019
(51) Int. Cl.: G01D 5/347

(54) **HALTEVORRICHTUNG FÜR EINEN DREHGEBER**

(71) Anmelder: Siemens Aktiengesellschaft, 80333 München (DE)
(72) Erfinder: Dölz, Volker, 97616 Bad Neustadt (DE)

(57) **Zusammenfassung**

Die Erfindung betrifft eine Haltevorrichtung (3, 4) zur Kopplung einer Gebereinheit (5) eines insbesondere modularen Drehgebers (1) mit einem Lagerschild (4) einer elektrischen Maschine. Für eine einfache und sichere Montage insbesondere eines modularen Drehgebers sowie für dessen sicheren Betrieb wird vorgeschlagen, dass die Haltevorrichtung (3, 4) im Wesentlichen aus einem Haltering (3) und aus dem Lagerschild (4) gebildet wird, wobei der Haltering (3) erste Kopplungselemente (16) zur mechanischen Kopplung des Halterings (3) mit dem Lagerschild (4) aufweist und wobei das Lagerschild (4) Führungsnuten (10) zur Aufnahme eines Gebermoduls (13) der Gebereinheit (5) aufweist.

## Beschreibung

Die Erfindung betrifft Haltevorrichtung zur Kopplung einer Gebereinheit eines insbesondere modularen Drehgebers mit einem Lagerschild einer elektrischen Maschine.

Die Erfindung betrifft weiter einen Drehgeber mit einer derartigen Haltevorrichtung, eine elektrische Maschine mit einer derartigen Haltevorrichtung sowie ein Verfahren zur Montage eines Drehgebers, insbesondere eines modularen Drehgebers mittels einer derartigen Haltevorrichtung.

Derartige Drehgeber sind in der Regel optische Drehzahlgeber, die zur Drehzahlregelung von Elektromotoren eingesetzt werden. Am gebräuchlichsten sind fertig auf dem Markt erhältliche einbaubare Drehgeber, die in der Regel aus einer Lagerung, einer Codescheibe sowie einer Elektronikeinheit mit Beleuchtung bestehen. Bei sogenannten Multiturn-Gebern werden neben der Winkellage auch die Anzahl der Umdrehungen gezählt. Dies geschieht entweder mechanisch über ein Getriebe oder magnetisch über einen sogenannten Wiegand-Sensor. Häufig gehören derartige Geber mit zu den teuersten Bauteilen eines Elektromotors.

Die WO 2010/072498 A1 betrifft ein Montageverfahren für einen modularen Drehgeber an dem zu messenden Objekt, bei dem der modulare Drehgeber eine Codescheibe und eine elektrische Schaltungseinheit umfasst, und bei dem die Codescheibe auf einer Drehachse montiert ist. Das Verfahren umfasst die Schritte: Anordnen der Codescheibe auf der Drehachse, Einstellen der Codescheibe entlang der Drehachse, um zu bewirken, dass der Abstand von dem zu messenden Objekt einem vorbestimmten Wert entspricht und Befestigen der elektrischen Schaltungseinheit an dem zu messenden Objekt.

Der Erfindung liegt die Aufgabe zu Grunde, eine einfache, kostengünstige und sichere Montage eines insbesondere modularen Drehgebers und gleichzeitig dessen sicheren Betrieb zu ermöglichen.

Diese Aufgabe wird einerseits durch eine Haltevorrichtung mit den im Anspruch 1 angegebenen Merkmalen gelöst.

Die Erfindung wird weiter durch einen Drehgeber mit einer derartigen Haltevorrichtung gemäß Anspruch 8, eine elektrische Maschine mit einer derartigen Haltevorrichtung gemäß Anspruch 11 sowie durch ein Verfahren zur Montage eines Drehgebers, insbesondere eines modularen Drehgebers mittels einer derartigen Haltevorrichtung gemäß Anspruch 12 gelöst.

Der Erfindung liegt die Erkenntnis zugrunde, dass anstelle eines fertig einbaubaren Drehgebers mit eigener Lagerung etc. kostengünstig auch ein sogenannter Kit-Geber eingesetzt werden kann, der als modularer Drehgeber ohne eigene Lagerung verwendet werden kann. Hierbei spielt dann die erforderliche Montage eine erhebliche Rolle, wobei erfindungsgemäß die Montage in überraschend einfacher Weise dadurch gelingt, dass die Haltevorrichtung im Wesentlichen aus einem Haltering und aus einem Lagerschild gebildet wird, wobei der Haltering erste Kopplungselemente zur mechanischen Kopplung des Halterings mit dem Lagerschild aufweist und wobei das Lagerschild Führungsnuten zur Aufnahme eines Gebermoduls der Gebereinheit aufweist. Hierdurch kann das Gebermodul sicher in der Gebereinheit positioniert werden und mittels des Halterings mit dem Lagerschild mechanisch gekoppelt werden.

Vorteilhafte Ausgestaltungen der Erfindung sind in den Unteransprüchen enthalten.

Eine einfache und sichere mechanische Kopplung der modularen Einzelkomponenten Haltering und Lagerschild gelingt dadurch, dass die im Haltering vorgesehenen ersten Kopplungselemente als Bohrungen zur Aufnahme von ersten Befestigungsschrauben zur mechanischen Befestigung des Halterings auf dem Lagerschild ausgebildet sind.

Eine sowohl mechanische als auch elektrische Ankopplung der Gebereinheit mit einer benötigten Platine kann auf einfache Weise dadurch erzielt werden, dass der Haltering zweite Kopplungselemente zur mechanischen Kopplung des Halterings mit einer Platine der Gebereinheit aufweist.

Hierzu sind die im Haltering vorgesehenen zweiten Kopplungselemente als Gewindebohrungen zur Aufnahme von zweiten Befestigungsschrauben ausgebildet, wobei die zweiten Befestigungsschrauben sowohl einer mechanischen Befestigung der Platine auf dem Haltering als auch einer elektrischen Masseverbindung der Platine dienen.

Eine kostengünstige Abschirmung von äußeren Störfeldern vor allem gegenüber einem auf der Gebereinheit angeordneten Sensor, insbesondere einem Wiegand-Sensor wird dadurch erzielt, dass an den Haltering mindestens ein Abschirmelement zur Abschirmung von äußeren Störfeldern angeformt ist, insbesondere zur Abschirmung von auf einen an der Gebereinheit angeordneten Wiegand-Sensor einwirkenden äußeren Störfeldern.

In vorteilhafter Weise ist das Abschirmelement als segmentförmige Laschen oder als geschlossener Topf ausgebildet.

Ein effektiver Schutz vor Verschmutzungen und Umwelteinflüssen für den Drehgeber kann dadurch sichergestellt werden, dass das Lagerschild eine insbesondere halbkreisförmig ausgebildete Staubschutzwand zum Schutz einer in dem Lagerschild angeordneten Codescheibe aufweist.

Die Grundkomponenten eines erfindungsgemäßen modularen Drehgebers umfassen somit das ein Drehgebermodul, eine Codescheibe, eine Platine sowie die diese Komponenten verbindende Haltevorrichtung.

Eine sichere Positionierung des Gebermoduls im Lagerschild wird dabei auf einfache Weise dadurch erzielt, dass das Gebermodul mindestens zwei Führungslaschen aufweist, die insbesondere am oberen Ende des Gebermoduls angeordnet sind, wobei die Führungslaschen zum Zusammenwirken mit den im Lagerschild vorgesehenen Führungsnuten vorgesehen sind.

Das erfindungsgemäße Verfahren zur Montage eines Drehgebers, insbesondere eines modularen Drehgebers mittels einer Haltevorrichtung umfasst folgende Schritte:
- Anbringen von mindestens zwei Führungslaschen am Gebermodul, insbesondere am oberen Ende des Gebermoduls,
- Klemmen des Gebermoduls auf diese Führungslaschen mittels des Halterings,
- Positionieren des Gebermoduls mittels einer im Lagerschild vorgesehenen Zentrieröffnung zur zentrierten Aufnahme des Gebermoduls im Lagerschild,
- Verschrauben des Halterings am Lagerschild über am Haltering angeformte erste Nocken,
- Verschrauben der insbesondere sichelförmig ausgeführten Platine über zwei Schrauben an den am Haltering vorgesehenen Gewindebohrungen im Bereich von am Haltering angeformten zweite Nocken.

Im Folgenden wird die Erfindung anhand der in den Figuren dargestellten Ausführungsbeispiele näher beschrieben und erläutert.

Es zeigen:
- FIG 1: einen modularen Drehgeber mit einer im Wesentlichen aus einem Haltering und einem Lagerschild gebildeten Haltevorrichtung,
- FIG 2: ein Gebermodul für den in Fig. 1 gezeigten modularen Drehgeber,
- FIG 3: einen Haltering für den in FIG 1 gezeigten modularen Drehgeber,
- FIG 4: ein Lagerschild für den in FIG 1 gezeigten modularen Drehgeber und
- FIG 5: einen Seitenschnitt durch eine elektrische Maschine mit einem modularen Drehgeber.

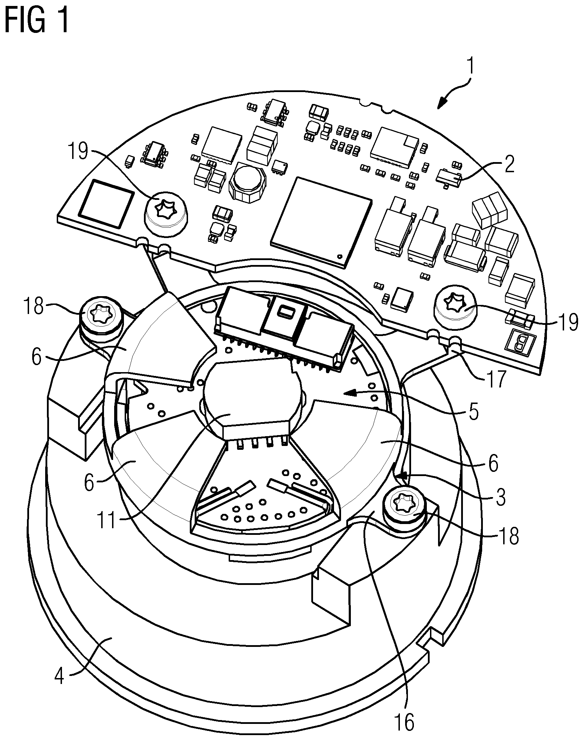

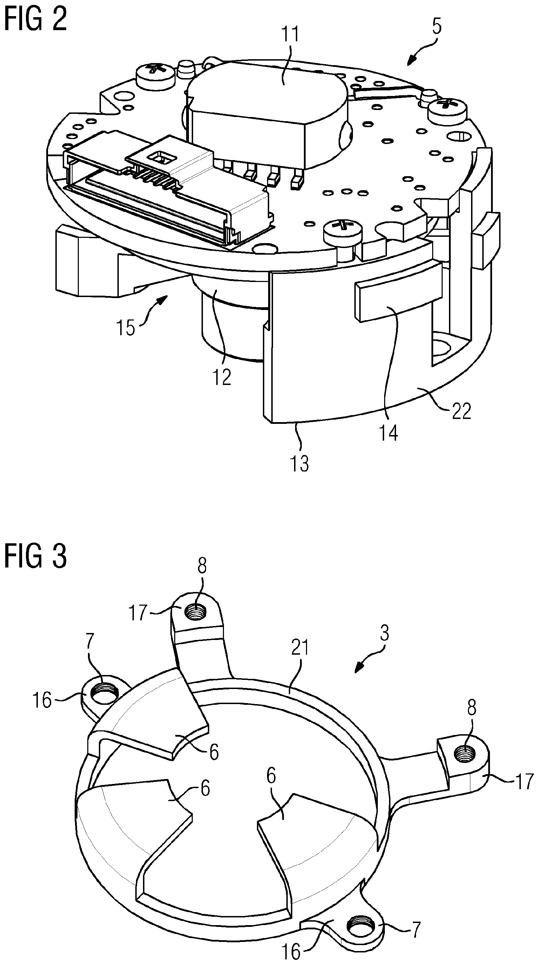

FIG 1 zeigt einen modularen Drehgeber 1 mit einer aus einem Haltering 3 und einem Lagerschild 4 gebildeten Haltevorrichtung. Der in FIG 1 dargestellte modulare Drehgeber 1 besteht im Wesentlichen aus dem Lagerschild 4, welches im unteren Bereich der FIG 1 dargestellt ist. Mit dem Lagerschild 1 mechanisch über erste Befestigungsschrauben 18 mechanisch gekoppelt ist der Haltering 3, der dann im Zusammenhang mit FIG 3 noch näher gezeigt und erläutert wird. Der Haltering 3 besteht im Wesentlichen aus einem kreisrunden Ring 21 (vergleiche FIG 3), an dem Abschirmlaschen 6 angeordnet sind. Darüber hinaus sind an dem Ringelement 21 des Halterings 3, erste Kopplungselemente 16 vorgesehen, die Befestigungslöcher 7 aufweisen. Diese ersten Kopplungselemente 16 sind nockenförmig an das Ringelement 21 angeformt. Die Befestigungslöcher 7 (vergleiche FIG 3) dienen der Durchführung der ersten Befestigungsschrauben 18 für die mechanische Kopplung des Halterings 3 mit dem Lagerschild 4.

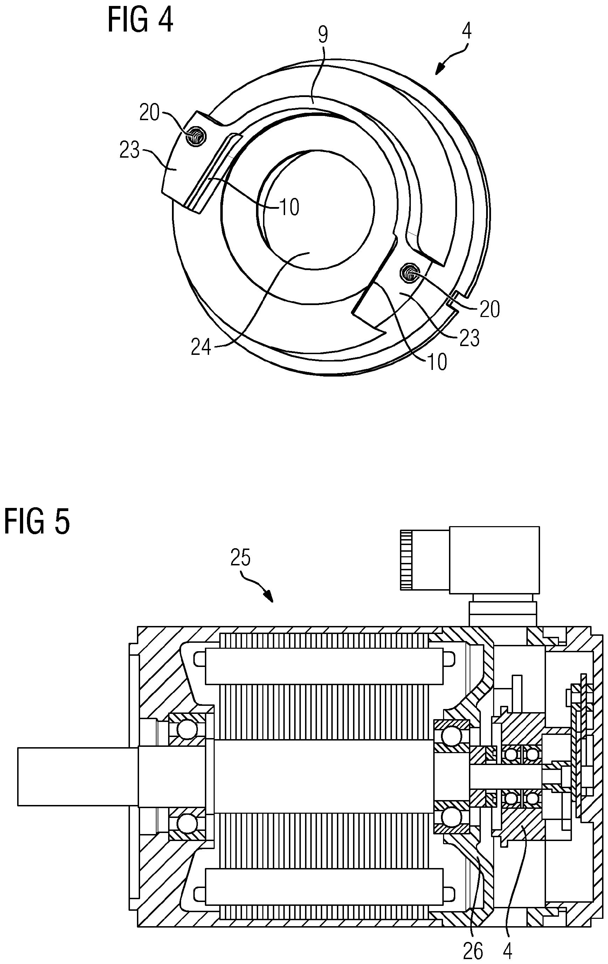

Der in FIG 1 dargestellte Drehgeber 1 enthält darüber hinaus eine Gebereinheit 5, die in dem Lagerschild 4 mechanisch gelagert ist (vergleiche FIG 4) und vom Haltering 3 zusätzlich mechanisch gehalten wird. Am Haltering 3 sind darüber hinaus zweite Kopplungselemente 17 angeordnet, in denen Gewindebohrungen 8 zur Aufnahme einer Platine 2 vorgesehen sind, wobei die Platine 2 mittels zweiter Befestigungsschrauben 19 in den ersten Gewindebohrungen 8 des Halterings 3 (vergleiche FIG 3) mechanisch befestigt ist. Die Gebereinheit 5 trägt einen im oberen Bereich sichtbaren sogenannten Wiegand-Sensor 11, der mittels der an den Haltering 3 angeformten Abschirmlaschen eine Abschirmung des Wiegand-Sensors 11 sicherstellt.

Die Besonderheit des in FIG 1 dargestellten modularen Drehgebers besteht darin, dass der Drehgeber 1 auf einfache und sichere Weise aus wenigen modularen Komponenten zusammengesetzt werden kann, wobei der modulare Drehgeber 1 aufgrund der speziellen modularen Bauweise eine einfache Montage sowie auch einen sicheren Betrieb des Drehgebers 1 ermöglicht. Eine Besonderheit des modularen Drehgebers besteht dabei darin, dass an der Gebereinheit 5 im oberen Bereich an gegenüber liegenden Seiten Laschen 14 (vergleiche FIG 2) angeordnet sind, die mit korrespondierenden Führungsnuten 10 (vergleiche FIG 4) des Lagerschildes 4 wirken und so eine stabile Lagerung der Gebereinheit 5 im Lagerschild 4 sicherstellen. Auch die für eine Koordinaten-Konversion benötigte Platine 2 ist bei dem in FIG 1 dargestellten Drehgeber 1 auf einfache und sichere Weise am Haltering 3 des Drehgebers 1 mechanisch befestigt, wobei über die Schraubverbindungen 19 zudem auch eine elektrische Masseverbindung sichergestellt ist. Zusätzliche störanfällige Masseleitungen können daher entfallen.

Die Besonderheit des in FIG 1 dargestellten Drehgebers 1 besteht somit darin, dass im Gegensatz zu bisherigen Lösungen der Anbau des Drehgebers 1 sehr einfach durchzuführen ist. So lässt sich durch die spezielle Gestaltung des Lagerschildes (vergleiche FIG 2) mit den seitlichen Nuten 10 die Gebereinheit 5, welches auch als sogenanntes C-Modul bezeichnet wird, sehr leicht in die richtige Position schieben, wobei so eine fehlerhafte Montage nahezu ausgeschlossen ist. Das Lagerschild 4 weist darüber hinaus auf der dem Einschub gegenüberliegenden Seite eine Staubschutzwand 9 (vergleiche FIG 4) auf, die die Code-Scheibe 12 (vergleiche FIG 2) der Gebereinheit 5 vor Verschmutzung schützt. Auch der Haltering 3 integriert gleichzeitig mehrere Funktionen, nämlich klemmt er zum einen die Gebereinheit 5 und hält die Platine 2 und schirmt mittels der Abschirmlaschen 6 noch den Wiegand-Sensor 11 ab. Aufgrund der Staubschutzwand 9 des Lagerschilds 4 kann somit auf eine separate Staubschutzkappe verzichtet werden, die ansonsten erforderlich wäre. Wie bereits ausgeführt, erfolgt eine Erdung der Platine 2 direkt über das Verschrauben mit dem Haltering 3. Durch eine Fertigung des Halterings 3 aus einem leitfähigen Material, insbesondere aus Stahl, ist ein separater Erdungsbügel nicht mehr notwendig, wie er bei bisher aus Kunststoff ausgeführten Staubschutzkappen bzw. Befestigungsvorrichtungen erforderlich wäre.

Somit integriert der Haltering, wie bereits ausgeführt, die Funktionen "Geber klemmen, Platine halten und erden sowie die Abschirmung des Wiegand-Sensors". Insgesamt kommt es hierdurch zu einer Senkung der Montagekosten sowie zu einer Erhöhung der Qualität bei der Montage als auch beim Betrieb und darüber hinaus auch zu einer leichten Reparaturfähigkeit im Servicefall.

Die Montage des modularen Drehgebers an einem Motorlagerschild 26 einer elektrischen Maschine 25 (vgl. FIG 5) erfolgt somit im Wesentlichen in folgenden Schritten:
- Geberlagerung montieren: Hierzu wird das Lagerschild 4 (Geberlagerschild) an der elektrischen Maschine 25 montiert.
- Aufpressen der Codescheibe: Hierzu wird die Codescheibe 12 auf der verlängerten Welle der elektrischen Maschine 25 aufgepresst.
- Einschieben des Gebermoduls 13: Dabei dienen die Laschen 14 als Führung in den Nuten 10 des Lagerschilds 4.
- Einsetzen des Gebermoduls 13 in den durch eine Öffnung 24 im Lagerschild 4 gebildeten Zentrierabsatzes.
- Aufsetzen des Halterings 3 auf das Lagerschild 4 und Montage des Halterings 3 auf dem Lagerschild 4 mittels der ersten Befestigungsschrauben.
- Auflegender Platine 2 auf den Haltering 3 und Befestigung der Platine 2 auf dem Haltering 3 mittels der zweiten Befestigungsschrauben.

FIG 2 zeigt ein Gebermodul 5 für den in FIG 1 gezeigten modularen Drehgeber 1. In FIG 2 ist nochmals dargestellt, aus welchen Komponenten im Wesentlichen die Gebereinheit 5 besteht. Die Gebereinheit 5 umfasst im Wesentlichen eine Öffnung 15 für das Gebermodul 13 mit der Codescheibe 12. Die Gebereinheit 5 weist eine zylinderförmige Seitenwand 22 auf, die an jeweils zwei gegenüberliegenden Seiten mit Laschen 14 versehen aufweist. Diese Laschen 14 korrespondieren mit Führungsnuten 10, wie sie in FIG 4 am Lagerschild 4 vorgesehen sind. Die Laschen 14 dienen somit einer Führung und Ausrichtung der Winkellage. In FIG 2 ist darüber hinaus auch noch der Wiegand-Sensor 11, wie er bereits im Zusammenhang mit FIG 1 erläutert wurde, erkennbar. Bezüglich der Wirkungsweise und dem Zusammenspiel der Gebereinheit 5 in Bezug auf den modularen Drehgeber 1, wird auf die Ausführungen zu FIG 1 sowie den übrigen Figuren verwiesen.

FIG 3 zeigt einen Haltering 3 für den in FIG 1 gezeigten modularen Drehgeber 1. Der Haltering 3 besteht im Wesentlichen aus einem Ringelement 21, an das Abschirmlaschen 6 angeformt sind. Darüber hinaus weist der Haltering 3 erste Kopplungselemente 16 sowie zweite Kopplungselemente 17 auf, die ersten Kopplungselemente 16 sind als an das Ringelement 21 angeformte Nocken 16 ausgebildet, in die Befestigungslöcher 7 zur Aufnahme von ersten Befestigungsschrauben für das Lagerschild (vergleiche FIG 1) eingebracht sind. Die zweiten Kopplungselemente 17 sind als an das Ringelement 21 angeformte zweite Nocken 17 ausgebildet, die erste Gewindebohrungen 8 zur Aufnahme von zweiten Befestigungsschrauben 19 für die Platine (vergleiche FIG 1) aufweisen.

Die zweiten Nockenelemente 17 sind gegenüber den ersten Nockenelementen 16 vom Ringelement 21 weiter beabstandet ausgebildet und die Stärke dieser Nockenelemente 17 ist im Bereich der Gewindebohrungen 8 stärker ausgestaltet, um einen sicheren Sitz der Befestigungsschrauben 19 für die Platine 2 sicherzustellen.

FIG 4 zeigt schließlich ein Lagerschild 4 für den in FIG 1 gezeigten modularen Drehgeber 1. Die Besonderheit des in FIG 4 dargestellten Lagerschildes 4 besteht darin, dass an dem Lagerschild 4 ein halbkreisförmiges Bandelement 23 vorgesehen ist, welches an gegenüberliegenden Seiten jeweils Führungsnuten 10 aufweist, die zur Aufnahme der an der Gebereinheit 5 angeordneten Führungslaschen 14 vorgesehen sind. Der vordere Halbkreis des Lagerschilds 4 zwischen den Wandelementen 23 ist in einem ersten Halbkreisbereich offen gestaltet, so dass eine Einführung der Gebereinheit 5 ermöglicht wird, während der gegenüberliegende Bereich des Lagerschilds 4 eine Staubschutzwand 9 trägt, die als Staubschutz für das Gebermodul bzw. die gesamte Gebereinheit 5 und insbesondere die Codescheibe 12 dient.

FIG 5 zeigt einen Seitenschnitt durch eine elektrische Maschine 25 mit einem modularen Drehgeber. Die Figur dient insbesondere einer Verdeutlichung, wo und wie der modulare Drehgeber mit einem Motorlagerschild 26 der elektrischen Maschine über das Lagerschild 4 des Drehgebers gekoppelt ist.

Zusammenfassend betrifft die Erfindung somit eine Haltevorrichtung 3,4 zur Kopplung einer Gebereinheit 5 eines insbesondere modularen Drehgebers 1 mit einem Motorlagerschild 26 einer elektrischen Maschine 25. Für eine einfache und sichere Montage insbesondere eines modularen Drehgebers sowie für dessen sicheren Betrieb wird vorgeschlagen, dass die Haltevorrichtung 3,4 im Wesentlichen aus einem Haltering 3 und aus dem Lagerschild 4 gebildet wird, wobei der Haltering 3 erste Kopplungselemente 16 zur mechanischen Kopplung des Halterings 3 mit dem Lagerschild 4 aufweist und wobei das Lagerschild 4 Führungsnuten 10 zur Aufnahme eines Gebermoduls 13 der Gebereinheit 5 aufweist.

## Patentansprüche

1. Haltevorrichtung (3, 4) zur Kopplung einer Gebereinheit (5) eines Drehgebers (1) mit einem Motorlagerschild (26) einer elektrischen Maschine (25),
wobei die Haltevorrichtung (3, 4) im Wesentlichen aus einem Haltering (3) und aus dem Lagerschild (4) gebildet wird,
wobei der Haltering (3) erste Kopplungselemente (16) zur mechanischen Kopplung des Halterings (3) mit dem Lagerschild (4) aufweist und wobei das Lagerschild (4) Führungsnuten (10) zur Aufnahme eines Gebermoduls (13) der Gebereinheit (5) aufweist.

2. Haltevorrichtung nach Anspruch 1,
wobei die im Haltering (3) vorgesehenen ersten Kopplungselemente (16) als Bohrungen (7) zur Aufnahme von ersten Befestigungsschrauben (18) zur mechanischen Befestigung des Halterings auf dem Lagerschild (4) ausgebildet sind.

3. Haltevorrichtung nach einem der Ansprüche 1 oder 2,
wobei der Haltering (3) zweite Kopplungselemente (17) zur mechanischen Kopplung des Halterings (3) mit einer Platine (2) der Gebereinheit (5) aufweist.

4. Haltevorrichtung nach Anspruch 3,
wobei die im Haltering (3) vorgesehenen zweiten Kopplungselemente (17) als Gewindebohrungen (8) zur Aufnahme von zweiten Befestigungsschrauben (19) ausgebildet sind, wobei die zweiten Befestigungsschrauben (19) sowohl einer mechanischen Befestigung der Platine (2) auf dem Haltering (3) als auch einer elektrischen Masseverbindung der Platine (2) dienen.

5. Haltevorrichtung nach einem der vorhergehenden Ansprüche, wobei an den Haltering (3) mindestens ein Abschirmelement (6) zur Abschirmung von äußeren Störfeldern angeformt ist, insbesondere zur Abschirmung von auf einen an der Gebereinheit (5) angeordneten Wiegand-Sensor (11) einwirkenden äußeren Störfeldern.

6. Haltevorrichtung nach einem der vorhergehenden Ansprüche, wobei das Abschirmelement (6) als segmentförmige Laschen (6) oder als geschlossener Topf ausgebildet ist.

7. Haltevorrichtung nach einem der vorhergehenden Ansprüche, wobei das Lagerschild (4) eine insbesondere halbkreisförmig ausgebildete Staubschutzwand (9) zum Schutz einer in dem Lagerschild (4) angeordneten Codescheibe (12) aufweist.

8. Drehgeber (1) mit einer Haltevorrichtung (3,4) nach einem der Ansprüche 1 bis 7.

9. Drehgeber nach Anspruch 8,
wobei der Drehgeber (1) als modularer Drehgeber mit einem Drehgebermodul (5), einer Codescheibe (12) und einer Platine (2) ausgebildet ist.

10. Drehgeber nach einem der Ansprüche 8 oder 9,
wobei das Gebermodul (13) mindestens zwei Führungslaschen (14) aufweist, die insbesondere am oberen Ende des Gebermoduls (13) angeordnet sind, wobei die Führungslaschen (14) zum Zusammenwirken mit den im Lagerschild vorgesehenen Führungsnuten (10) vorgesehen sind.

11. Elektrische Maschine mit mindestens einer Haltevorrichtung (3,4) nach einem der Ansprüche 1 bis 7 oder mit mindestens einem Drehgeber nach Anspruch 8.

12. Verfahren zur Montage eines Drehgebers (1), insbesondere eines modularen Drehgebers (1) mittels einer Haltevorrichtung (3,4) nach einem der Ansprüche 1 bis 7, wobei das Verfahren folgende Schritte umfasst:
- Anbringen von mindestens zwei Führungslaschen (14) am Gebermodul (13), insbesondere am oberen Ende des Gebermoduls (13),
- Klemmen des Gebermoduls (13) auf diese Führungslaschen (14) mittels des Halterings (3),
- Positionieren des Gebermoduls (13) mittels einer im Lagerschild vorgesehenen Zentrieröffnung (24) zur zentrierten Aufnahme des Gebermoduls (13) im Lagerschild (4),
- Verschrauben des Halterings (3) am Lagerschild (4) über am Haltering (3) angeformte erste Nocken (16),
- Verschrauben der insbesondere sichelförmig ausgeführten Platine (2) über zwei Schrauben (19) an den am Haltering (3) vorgesehenen Gewindebohrungen (8) im Bereich von am Haltering (3) angeformten zweite Nocken (17).
